## Europäisches Patentamt

## European Patent Office

## Office européen des brevets

(19)

(11) Veröffentlichungsnummer: **0 304 537**
**A2**

(12) ## EUROPÄISCHE PATENTANMELDUNG

(21) Anmeldenummer: **88102868.2**

(22) Anmeldetag: **31.01.86**

(51) Int. Cl.⁴: **B01F  15/00**

(30) Priorität: **14.05.85 DE 3517325**

(43) Veröffentlichungstag der Anmeldung:
**01.03.89 Patentblatt  89/09**

(60) Veröffentlichungsnummer der früheren
Anmeldung nach Art. 76 EPÜ: **0 204 066**

(84) Benannte Vertragsstaaten:
**DE FR GB NL**

(71) Anmelder: **Drägerwerk Aktiengesellschaft**
**Moislinger Allee 53-55**
**D-2400 Lübeck 1(DE)**

(72) Erfinder: **Röhling, Holmer, Ing. grad.**
**Bischofsteicher Weg 28**
**D-2067 Reinfeld(DE)**

(54) **Gleichdruckregler zur Versorgung einer Misch- und Dosiervorrichtung für strömende Medien.**

(57) Ein Gleichdruckregler zur Vesorgung einer
Misch- uns Dosiervorrichtung (49) für strömende
Medien, welche mindestens zwei in einer Mischkammer (15) mündende, jeweils einen Druckminderer
(4,5) enthaltende Zuführungsleitungen (30,31) und
einen Mischgasauslaß (21) aufweist, soll derart verbessert werden, daß Druckschwankungen soweit
ausgeglichen werden, daß sie keinen Einfluß mehr
auf die nachgeschaltete Misch- und Dosiervorrichtung (49) ausüben.

Dazu ist vorgesehen, daß ein Steuerdruckregler
(3) vordruckseitig an die erste Komponentenleitung
(1), hinterdruckseitig mit seiner Membrankammer
(23) über eine Steuerleitung (25,26) an die Steuerkammern (43,44) der Druckminderer (4,5), und mit
seiner Steuerkammer (33) an die zweite Komponentenleitung (2) angeschlossen ist, und daß die den
Steuerdruck führenden Räume (23,25,26,43,44) mit
einer Entlüftungsöffnung (45) verbunden sind.

Fig. 1

EP 0 304 537 A2

## Gleichdruckregler zur Versorgung einer Misch- und Dosiervorrichtung für strömende Medien

Die Erfindung betrifft einen Gleichdruckregler nach dem Oberbegriff des Anspruchs 1.

Eine Misch- und Dosiervorrichtung nach der DE-OS 22 24 588 wird über eine Druck-Zyklus-Einheit mit verschiedenen zu mischenden Gasen versorgt. Auftretende Druckschwankungen in den Zuführungsleitungen bis hin zu der Druck-Zyklus-Einheit müssen durch einen aufwendigen, raumaufbrauchenden Stabilisierungstank ausgeglichen werden. Dabei ist nicht sichergestellt, daß höhere Druckschwankungen dennoch bis zur nachgeschalteten Misch- und Dosiereinheit durchschlagen und zu einer Fehlmischung bzw. -dosierung führen können.

Der vorliegenden Erfindung liegt somit die Aufgabe zugrunde, Druckschwankungen in einem Gleichdruckregler soweit auszugleichen, daß sie keinen Einfluß mehr auf eine nachgeschaltete Misch-und Dosiereinrichtung zeigen.

Diese Aufgabe wird durch die im kennzeichnenden Teil des Anspruchs 1 genannten Merkmale erzielt.

Mit dieser Gleichdruckregelung wird erreicht, daß bei Druckänderung in einer der Komponentenleitungen die Druckminderer derart gesteuert werden, daß in den Zuführungsleitungen zur erfindungsgemäßen Misch- und Dosiereinrichtung gleiche Drücke auf dem jeweils höchstmöglichen Niveau herrschen, welches durch den jeweils geringeren der beiden Komponentendrücke bestimmt ist. Ist der Verbindungskanal zwischen Mischkammer und Gasauslaßkammer geschlossen, bewirkt der Gleichdruckregler, daß auch die Druckminderer die beiden Zuführungsleitungen verschließen. Eine unkontrollierte Nachspeisung in die Mischkammer bei ruhender Entnahme, die dort zu verändertem Gemisch führen würde, wird vermieden. Bei nachfolgendem Öffnen des Verbindungskanals liegen wieder die gleichen Druckverhältnisse vor.

Vorteilhafterweise ist die Entlülftungsöffnung mit einer Abströmdüse versehen, um unnötige Mengen an abströmendem Gas zu vermeiden.

Ein der Entlüftungsöffnung vorgeschaltetes druckgesteuertes Auslaßventil sorgt dafür, daß ein Abströmen nur bei Unterschreiten des Druckes in der zweiten Komponentenleitung unter den Druck in der ersten Komponentenleitung kurzzeitig zum Zwecke des Druckausgleichs zwischen Membran- und Steuerkammer des Steuerdruckreglers erfolgt.

In Verbindung mit dem erfindungsgemäßen Gleichdruckregler erhält man eine Gasmisch- und Dosiervorrichtung, bei welcher der Hinterdruck im Mischgasauslaßkanal dem Vordruck in den Komponentenleitungen folgt, und das Mischungsverhältnis lediglich von den Einstellungen der Dosiereinheit abhängt.

Die erfindungsgemäße Gleichdruckregelung arbeitet zusammen mit der Misch- und Dosiervorrichtung unabhängig von der Entnahmemenge mit konstanten Mischungsverhältnissen, solange nur der Differenzdruck zwischen Mischkammer und Gasauslaßkammer als Maß der Entnahmemenge einen bestimmten, einstellbaren Sollwert überschreitet.

In einer nachfolgende dargestellten schematischen Zeichnung wird ein Ausführungsbeispiel der Erfindung näher erläutert; es zeigen:

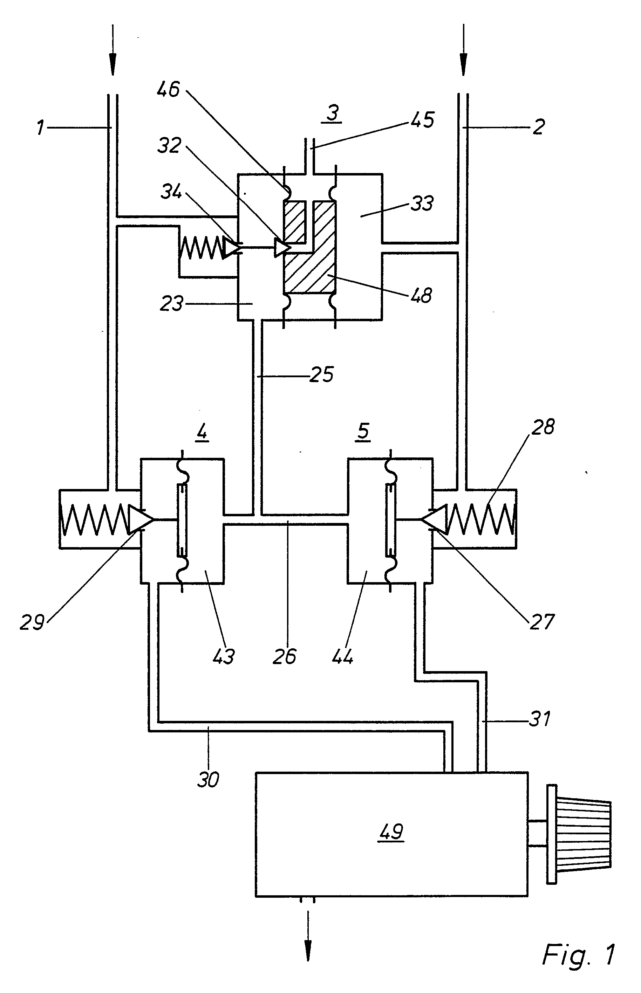

Fig. 1 eine Misch- und Dosiervorrichtung mit vorgeschaltetem Gleichdruckregler im Teilschnitt

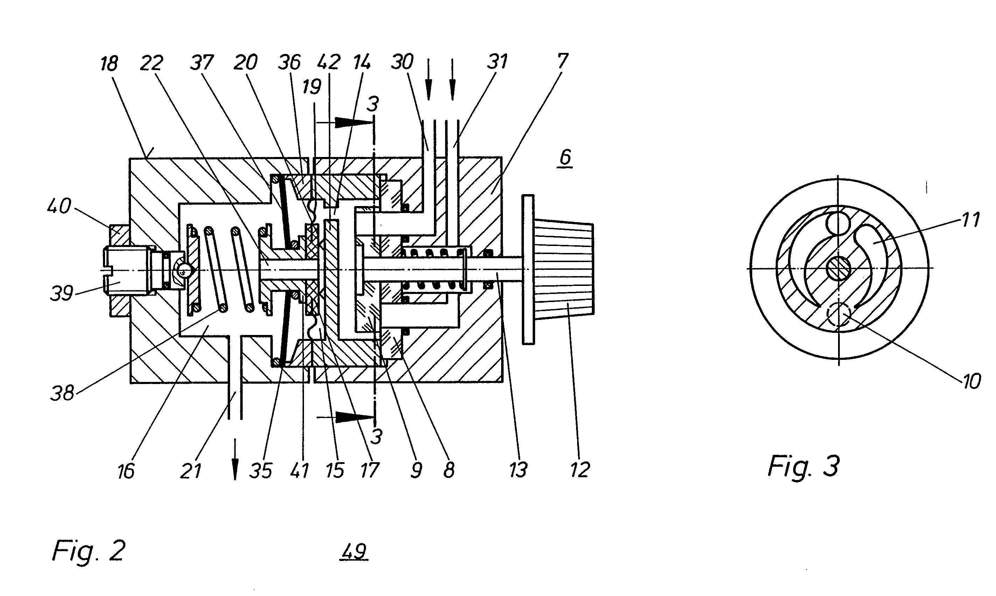

Fig. 2 den Mischer in vergrößerter Schnittdardarstellung

Fig. 3 den Schnitt 3-3 durch das Scheibenventil.

Die nachfolgend beschriebene Misch- und Dosiervorrichtung ist Gegenstand der europäischen Patentanmeldung Nr. 86 10 1250.8.

Die der Gasmischvorrichtung über die Komponentenleitungen 1, 2 zugeführten zu mischenden Gase werden in den vom Steuerdruckregler 3 pneumatisch angesteuerten Druckminderern 4, 5, die einen Gleichdruckregler bilden, auf gleiche Drücke gebracht. Die Druckhöhe wird selbsttätig über den Steuerdruckregler 3 von dem jeweils niedrigeren der Drücke in den Komponentenleitungen 1, 2 bestimmt. Die Einstellung der Mischungsverhältnisse und die Mischung selbst erfolgt in dem Mischer 49. Dieser enthält eine Dosiereinheit 6, welche als Scheibenventil ausgebildet ist. Im Gehäuse 7 ist die mit zwei Öffnungen 10 ausgestattete Ventilscheibe 8 fest eingesetzt. In der darüber liegenden drehbar gelagerten Ventilscheibe 9 sind zwei in ihrem Querschnitt gegenläufig sich verändernde Öffnungen 11 angebracht. Durch Drehen des Einstellknopfes 12 für das Mischungsverhältnis und der Welle 13 werden die Öffnungen 11 der Scheibe 9 mehr oder weniger stark, gemäß dem gewünschten Mischungsverhältnis, mit den Öffnungen 10 der Scheibe 8 in Deckung gebracht. Die gemischten Gase gelangen über die Durchbrüche 14 in die Mischkammer 15. Die Mischkammer 15 ist von der Gasauslaßkammer 16 durch eine zwischen dem Gehäuse 18 und einem Membranträger 17 eingespannten Membran 19 gasdicht abgeteilt. Wenn der Differenzdruck zwischen der Mischkammer 15 und der Gasauslaßkammer 16 ein bestimmtes Maß (z.B. 0,2 bar) übersteigt, überwiegt die von dem Membranträger 17 ausgeübte Kraft die gemeinsame Kraft der Stellfeder 38 und der Tellerfeder 37, so daß der Membranträger 17 sprunghaft unter der Wirkung der an ihrem Umfang 35 durch Paßstücke 36 eingespannten Tellerfeder 37 den Ventilsitz 20 über das Mitnehmerstück 41 vom Zwischensteg 42 abhebt und den Mischgasflow über die Gasauslaßkammer 16 zum Mischgasauslaßkanal 21 freigibt. Bei ansteigendem Druck auf der Gasauslaßseite (z.B. aufgrund geringer Gasentnahme) sinkt die Druckdifferenz zwischen Mischkammer 15 und Gasauslaßkammer 16 wieder, so daß der Membranträger 17 wieder die Ausgangsstellung einnimmt und den Ventilsitz 20 verschließt.

Bei Druckdifferenzen zwischen Mischkammer 15 und Gasauslaßkammer 16 oberhalb der Mindestdifferenz bleibt der Verbindungskanal 22 stets geöffnet, so daß das Mischungsverhältnis nur durch die Vorwahl der Drosselquerschnitte der Ventilscheiben 8, 9 bestimmt wird.

Die Einstellung der erforderlichen Druckdifferenz geschieht mittels der Verstellung der Stellfeder 38 über Schraube 39 und Mutter 40.

Die Funktionsweise des Gleichdruckreglers in Verbindung mit der Misch- und Dosiervorrichtung wird im folgenden erläutert.

Ist der Druck in der Komponentenleitung 2 größer als in der Komponentenleitung 1, wird dieser Druck in der Steuerkammer 33, des Steuerdruckreglers 3 das Ventil 34 ständig offenhalten. Der Gasdruck aus Leitung 1 herrscht dann auch über die Steuerleitungen 25, 26 in den Steuerkammern 43, 44 der Druckminderer 4, 5. Der Druck in der Komponentenleitung 2 setzt sich auf das Ventil 27 fort und bewegt dieses in Schließrichtung unter gleichzeitiger Schließwirkung der Feder 28, da in seiner Steuerkammer 44 der niedrigere Druck aus der Komponentenleitung 1 herrscht. Das Ventil 29 des Druckminderers 4 wird entsprechend weit geöffnet, so daß die Drücke in den Zuführungsleitungen 30, 31 jeweils, einander gleich, dem niedrigeren der beiden Komponentendrücke, in diesem Falle dem Druck in der Komponentenleitung 1, entsprechen.

Bei Druckgleichheit zwischen den Komponentenleitungen 1, 2 schließt das Ventil 34. Der Steuerdruck entspricht dabei dem Gasdruck in Leitung 1 und somit auch in Leitung 2. Damit auch bei weiter sinkendem Gasdruck in der Komponentenleitung 2 der Steuerdruck in der Membrankammer 23 dem sinkenden Druck in der Steuerkammer 33 folgen kann, besitzt der Steuerdruckregler 3 eine Entlüftungsöffnung 45. Die Entlüftungsöffnung 45 befindet sich im Zwischenraum einer Doppelmembran 46, die ein Zwischenstück 48 aufnimmt, welches das druckgesteuerte Auslaßventil 32 und die Entlüftungsöffnung 45 strömungsmäßig verbindet.

Bei weiter sinkendem Gasdruck in der Komponentenleitung 2 öffnet das Auslaßventil 32 so lange, bis der Steuerdruck durch Entlastung über das Auslaßventil 32 auf den neuen Wert gesunken ist, der dem Druck in Komponentenleitung 2 entspricht.

Diesem Steuerdruck entspricht auch der Hinterdruck der Druckminderer 4, 5 in den Zuführungsleitungen 30, 31. Solange der Verbindungskanal 22 geöffnet ist, d.h. solange eine vorgebbare Druckdifferenz zwischen Mischkammer 15 und Gasauslaßkammer 16 erreicht wird, wird sich der Druck der Zuführungsleitungen 30, 31 bis zum Mischgasauslaßkanal 21 fortsetzen. Somit erhält man einen Mischgasdruck, welcher "floatend" zu den Eingangsdrücken der Druckminderer 4, 5 nachgeregelt wird.

Bei geschlossenem Verbindungskanal 22, d.h. wenn die erforderliche Druckdifferenz zwischen Mischkammer 15 und Gasauslaßkammer 16 infolge verschwindender Mischgasentnahme nicht mehr aufrecht erhalten werden kann, wird der sich aufbauende Druckstau in den Komponentenleitungen 1, 2 ein sicheres und definiertes Verschließen der beiden Ventile 27, 29 bewirken. Bei anschließendem Öffnen des Verbindungskanales 22, z.B. bei steigender Entnahme aus dem Mischgasauslaßkanal 21, werden in den Zuführungsleitungen 30, 31 die ursprünglich eingestellten Druckverhältnisse wiederhergestellt.

## Ansprüche

1. Gleichdruckregler zur Versorgung einer Misch- und Dosiervorrichtung (49) für strömende Medien, welche mindestens zwei in eine Mischkammer (15) mündende, jeweils einen Druckminderer (4,5) enthaltende Zuführungsleitungen (30,31) und einen Mischgasauslaß (21) aufweist, dadurch gekennzeichnet, daß ein Steuerdruckregler (3) vordruckseitig an die erste Komponentenleitung (1), hinterdruckseitig mit seiner Membrankammer (23) über eine Steuerleitung (25,26) an die Steuerkammern (43,44) der Druckminderer (4,5), und mit seiner Steuerkammer (33) an die zweite Komponentenleitung (2) angeschlossen ist, und daß die Steuerdruck führenden Räume (23,25,26,43,44) mit einer Entlüfungsöffnung (45) verbunden sind.

2. Gleichdruckregler nach Anspruch 1, dadurch gekennzeichnet, daß die Entlüftungsöffnung (45) eine Abströmdüse aufweist.

3. Gleichdruckregler nach Anspruch 1, dadurch gekennzeichnet, daß der Entlüftungsöffnung (45) ein druckgesteuertes Auslaßventil (32) vorgeschaltet ist.

Fig. 1

18  22  37  20  36  42  14  30  31  7

19

3

40

6

39

38

16  21  35  41  15  17  9  8  13  12

3

Fig. 2                    49

11

10

Fig. 3

EP 0 304 537 A2